# EUROPÄISCHE PATENTSCHRIFT

(11) **EP 1 708 056 B1**
(45) Veröffentlichungstag und Bekanntmachung des Hinweises auf die Patenterteilung: **30.07.2008**
(21) Anmeldenummer: 05006929.3
(22) Anmeldetag: 30.03.2005
(51) Int. Cl.: G05B 19/042, G05B 19/05, G05B 23/02

(54) **Dynamisches Zuordnen von Meldungseigenschaften zu einer Alarmmeldung zur Meldungseskalation**
Dynamic attribution of alarm messages for alarm escalation
Attribution dynamique des télégrammes d'alarme pour escalade des alarmes

(43) Veröffentlichungstag der Anmeldung: 04.10.2006
(73) Patentinhaber: SIEMENS AKTIENGESELLSCHAFT, 80333 München (DE)
(72) Erfinder: Beck, Hans-Joachim, 76287 Rheinstetten (DE); Becker, Norbert, 91058 Erlangen (DE); Helmig, Dieter, 90475 Nürnberg (DE); Laforsch, Jürgen, 77815 Bühl (DE); Schlemper, Michael, 91056 Erlangen (DE); Weigel, Stefan, 90562 Röckenhof (DE); Zistel, Bernhard, 76275 Ettlingen (DE)

(56) Entgegenhaltungen:
- DE-A1- 10 054 751
- DE-A1- 10 217 107
- US-A- 4 816 208
- US-A- 5 768 119

## Beschreibung

Die Erfindung betrifft ein System zum Erzeugen und Darstellen von Meldungen und/oder Alarmen insbesondere in einem Automatisierungssystem einer Anlage und/oder eines Prozesses. Die Erfindung betrifft weiterhin ein entsprechendes Verfahren.

Bei der Bedienung und Überwachung von automatisierten Produktionseinrichtungen, beispielsweise im Rahmen der Fertigungsindustrie oder der Prozessindustrie, werden in der Regel Ereignisse und Fehler aus dem Produktionsprozess heraus erfasst. Diese erfassten Informationen werden in Form von Meldungen oder Alarmen an eine übergeordnete Komponente, z. B. ein HMI-Gerät weitergemeldet. Die Meldungen und Alarme können auch über mehrer lokale Einheiten hinweg zusammengefasst werden und auf einem Leitstand, der zur Überwachung der gesamten Produktion dient, angezeigt werden.

Für eine Anzeige mit hohem Informationsgehalt ist es unter Umständen notwendig, die im Produktionsprozess generierten Meldungen abhängig vom Betriebszustand der Fertigungsanlage bzw. des Produktionsprozesses zusätzlich zu gewichten und diese Meldungen anschließend mit einer speziellen, ihnen zugedachten Priorität zur Anzeige zu bringen. Beispielsweise kann eine generierte Meldung in Abhängigkeit von dem Gesamtzustand einer Anlage bzw. eines Prozesses unterschiedlich relevant sein und somit besteht das Erfordernis, sie auf einem HMI-Gerät in Abhängigkeit von diesem Gesamtzustand unterschiedlich darzustellen.

Meldungen und Alarme, die aus dem Produktionsprozess bzw. von der Anlage gesendet werden sollen, werden im Rahmen der Projektierung einer Automatisierungslösung bereits im Engineering-System projektiert. Hierbei werden Meldungen, die abhängig vom Betriebszustand der Anlage bzw. des Prozesses unterschiedlich zur Anzeige gebrachten werden sollen bisher beispielsweise mehrfach im System projektiert. Hierdurch liegen die Meldungen quasi parallel vor und eine der parallelen Meldungen wird in Abhängigkeit vom Zustand der Anlage dann entsprechend zur Anzeige gebracht. Bei dieser Vorgehensweise entstehen jedoch viele Redundanzen im Rahmen der Automatisierungslösung.

Eine andere Möglichkeit ist, die Information, in welcher Form die Meldung bzw. der Alarm angezeigt werden soll, in Form eines Prozessbegleitwerts an das HMI-Gerät zu übertragen. Hierbei ist jedoch eine Sonderbehandlung dieser zusätzlich mit der Meldung übertragenen Information in der jeweiligen übergeordneten Komponente, beispielsweise dem HMI-Gerät, welches als Verarbeitungsvorrichtung fungiert, notwendig.

Aus der deutschen Offenlegungsschrift DE 102 17 107 A1 sind erweiterte Gerätealarme in einem Prozesssteuersystem bekannt. Dabei erzeugt eine sich in einem Feldgerät befindende Alarmerzeugungssoftware Alarme, die zu einer auf einem Computer laufenden Alarmverarbeitungssoftware geschickt werden, die sie aufbereitet und auf einem Display anzeigt.

Die Aufgabe der vorliegenden Erfindung besteht daher darin, ein System und ein Verfahren anzugeben, mit deren Hilfe Meldungen und/oder Alarme in Abhängigkeit vom Zustand einer Produktionsanlage oder eines Prozesses auf einfache Weise unterschiedlich angezeigt werden können.

Die Aufgabe wird gelöst durch ein System zum Erzeugen und Darstellen von Meldungen und/oder Alarmen insbesondere in einem Automatisierungssystem einer Anlage und/oder eines Prozesses, mit mindestens einem Meldungsauslöser zur Erzeugung mindestens einer Meldung und/oder eines Alarms, wobei die Meldung und/oder der Alarm mindestens ein Attribut aufweist und mit mindestens einer Verarbeitungsvorrichtung zur Darstellung der Meldung und/oder des Alarms, wobei der Meldungsauslöser zur Übertragung des Attributs mit der Meldung und/oder dem Alarm an die mindestens eine Verarbeitungsvorrichtung vorgesehen ist und wobei die Verarbeitungsvorrichtung Mittel zur Auswertung des Attributs aufweist.

Die Erfindung wird weiterhin gelöst durch ein Verfahren zum Erzeugen und Darstellen von Meldungen und/oder Alarmen, insbesondere in einem Automatisierungssystem einer Anlage und/oder eines Prozesses, bei dem mindestens eine Meldung und/oder ein Alarm durch mindestens einen Meldungsauslöser erzeugt wird, wobei die Meldung und/oder der Alarm ein Attribut aufweist und die Meldung und/oder der Alarm mittels mindestens einer Verarbeitungsvorrichtung dargestellt wird, wobei der Meldungsauslöser das Attribut mit der Meldung und/oder den Alarm an die mindestens eine Verarbeitungsvorrichtung überträgt und wobei das Attribut durch die Verarbeitungsvorrichtung ausgewertet wird.

Im Rahmen der Erstellung einer Automatisierungslösung werden bei der Projektierung Meldungen nach dem Typ-Instanzkonzept projektiert. Hierbei weisen die Meldungen unterschiedliche Attributsklassen auf. Bei der Meldungsprojektierung werden zwei Attributsklassen verwendet. Die erste Attributsklasse beinhaltet Attribute, die nur die Zielsysteme, beispielsweise ein HMI-Gerät betreffen. Diese Attribute werden durch die Projektierung im Engineering-System nur den entsprechenden Zielsystemen bekannt gemacht. Derartige Attribute bestimmen z. B. die Art und Weise der Darstellung der Meldung auch dem Zielsystem bzw. dem HMI-Gerät; beispielsweise kann es sich um die Darstellung der Schriftgröße die Farbe oder ähnliches Handeln.

Eine zweite Attributsklasse die im Engineering-System zum Projektierungszeitpunkt festgelegt wird, beinhaltet Attribute, die sowohl dem Meldungserzeuger beispielsweise einer Steuerung oder einem Feldgerät als auch dem Meldungsempfänger, also dem Zielsystem, beispielsweise einem HMI-Gerät zur Interpretation mitgeteilt werden. Derartige Attribute werden von den meldungsauslösenden Systemen bzw. den Meldungserzeugern, beispielsweise einer Steuerung, ausgewertet und können interpretiert werden. Sie beinhalten z. B. Information über die Bearbeitungsreihenfolge von Meldungen. Diese Attribute werden jedoch nicht mit einer vom Meldungserzeuger ausgelösten Meldung zum Meldungsempfänger, beispielsweise dem HMI-Gerät übertragen.

Der Erfindung liegt die Erkenntnis zu Grunde, dass mit Hilfe einer weiteren Attributsklasse, welche vom Engineering-System während der Meldungsprojektierung erzeugt wird, eine Darstellung der Meldungen auf der Verarbeitungsvorrichtung, beispielsweise dem HMI-Gerät, in Abhängigkeit vom Zustand der Anlage möglich ist, wenn die Attribute mit der Meldung von dem Meldungsauslöser, beispielsweise der Steuerung oder einem HMI-Gerät, direkt an die Verarbeitungsvorrichtung übertragen und dort ausgewertet werden können.

Hierbei können die Attribute von dem Meldungsauslöser entsprechend des Anlagenzustands geändert werden, beispielsweise können sie dynamisch an den jeweiligen Anlagenzustand angepasst werden und somit wird mit der Meldung gleichzeitig die Information darüber übertragen, wie die Meldung auf Empfängerseite, beispielsweise dem HMI-Gerät, dargestellt werden soll. Hierdurch wird Engineering-Aufwand durch wiederholtes Projektieren von Meldungen, welche verschiedene Anlagenzustände zu einem Meldungsergebnis darstellen, vermieden. Dies spart Engineering-Aufwand bei der Projektierung und auch Systemressourcen im Rahmen des Automatisierungssystems.

Die Attributsklasse welche direkt vom Meldungserzeuger mit der Meldung an den Meldungsempfänger übertragen wird, kann während der Laufzeit dynamisch geändert werden. Dies erfolgt im Rahmen der Automatisierungslösung durch den MeldungsErzeuger. Im Zielsystem, beispielsweise dem HMI-Gerät kann das Attribut ausgewertet werden. Hiermit lassen sich z. B. Eskalationsstrategien für Meldesysteme realisieren. Abhängig von Betriebsparametern und Entstehungszeitpunkten von Meldeereignissen kann die Wichtigkeit einer Meldung durch den Meldeerzeuger dynamisch verändert werden. Dadurch kann eine Meldung im HMI-Gerät z. B. mit unterschiedlicher Priorität dargestellt werden.

Weitere vorteilhafte Ausbildungen der Erfindung sind in den Unteransprüchen angegeben.

Im Folgenden wird die Erfindung anhand des in der Figur dargestellten Ausführungsbeispiels näher beschrieben und erläutert:

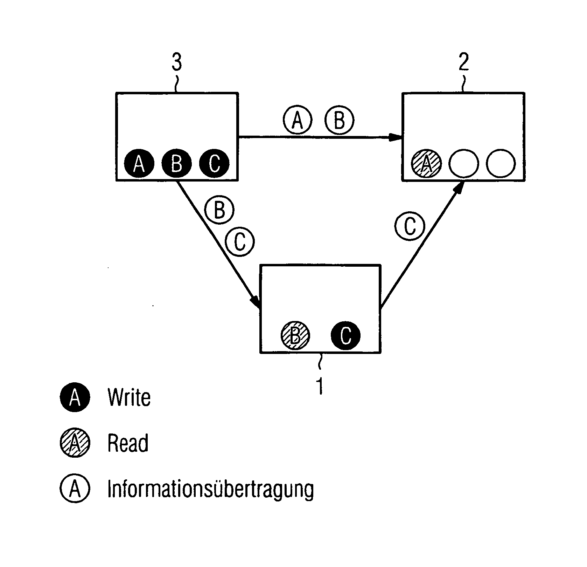

Figur 1 stellt die Übertragung von Attributen zwischen den einzelnen Bestandteilen eines Systems zum Erzeugen und Darstellen von Meldungen dar. In einer Projektiervorrichtung 3, beispielsweise einem Engineering-System, werden drei Attributsklassen A, B und C definiert und evtl. vorgesetzt. Ein Attribut A wird aus der Projektierung in der Projektiervorrichtung 3 direkt an die Verarbeitungsvorrichtung 2, z. B. ein HMI-System übertragen und dort ausgewertet. Der Meldungserzeuger bzw. der Meldungsauslöser 1, beispielsweise eine Steuerung als eigentlicher Auslöser der Meldung, kennt diese Attribute A nicht. Die Attribute A werden verwendet, um z. B. die Art und Weise der Visualisierung der Meldung bzw. des Alarms zu beschreiben. Beispielsweise soll eine Meldung blinkend auf rotem Hintergrund dargestellt werden.

Die Attribute einer weiteren Attributsklasse B werden wie ein Attribut A an die Verarbeitungsvorrichtung 2 bzw. das Meldungs-/Zielsystem übertragen und haben bezogen auf das Zielsystem bzw. die Verarbeitungsvorrichtung 2 die gleiche Wirkung. Zusätzlich werden die Attribute B auch an das die Meldung auslösende Gerät, den Meldungsauslöser 1, beispielsweise eine Steuerung oder ein Feldgerät, übertragen und können dort ausgewertet werden. Sie geben beispielsweise die Bearbeitungsreihenfolge von Meldungen an. Die Attribute B werden jedoch nicht mit einer ausgelösten Meldung von dem Meldungsauslöser 1 zur Verarbeitungsvorrichtung 2 übertragen.

Die neue Attributsklasse C wird ebenfalls von der Projektiervorrichtung 3, dem Engineering-System, bei der Projektierung erstellt. Letztendlich werden die Attribute C dieser Klasse in der Verarbeitungsvorrichtung 2 ausgewertet und dargestellt. Ein Attribut C hat also die gleiche Wirkung wie die Attribute A und B. Im Unterschied zu den Attributen der Klasse A und B wird die Attributsklasse C direkt von dem Meldungsauslöser 1, also beispielsweise der Steuerung, an die Verarbeitungsvorrichtung 2, also das HMI-Gerät bzw. den Leitstand, übertragen.

Durch eine dynamische Änderung der Attribute C in dem Meldungsauslöser 1, insbesondere einer Steuerung, kann die Meldungsverarbeitung in der Verarbeitungsvorrichtung 2 zur Laufzeit dynamisch gesteuert werden. Beispielsweise hat die Meldung "Kühlwasser unterhalb Min-Wert" normalerweise die Priorität "3" mit einer Normalanzeige in der Verarbeitungsvorrichtung 2 bzw. dem HMI-Gerät. Hat jedoch gleichzeitig die aktuelle Betriebstemperatur der Maschine einen definierten Grenzwert überschritten, wird die Meldung dynamisch vom Meldungserzeuger bzw. dem Meldungsauslöser 1, also einer Steuerung, beispielsweise auf Priorität 2 gesetzt. Dies hat zur Folge, dass in der Verarbeitungsvorrichtung 2, am HMI-Gerät, eine zusätzliche Signalisierung, beispielsweise mit einer Hupe, ausgelöst wird.

## Patentansprüche

1. System zum Erzeugen und Darstellen von Meldungen und/oder Alarmen, insbesondere in einem Automatisierungssystem einer Anlage und/oder eines Prozesses,
• mit mindestens einem Meldungsauslöser (1) zur Erzeugung mindestens einer Meldung und/oder eines Alarms, wobei die Meldung und/oder der Alarm mindestens ein Attribut (C) aufweist und
• mit mindestens einer Verarbeitungsvorrichtung (2) zur Darstellung der Meldung und/oder des Alarms,
wobei der Meldungsauslöser (1) zur Übertragung des Attributs (C) mit der Meldung und/oder dem Alarm an die mindestens eine Verarbeitungsvorrichtung (2) vorgesehen ist und wobei die Verarbeitungsvorrichtung (2) Mittel zur Auswertung des Attributs (C) aufweist
**dadurch gekennzeichnet, dass**
der Meldungsauslöser (1) zur dynamischen Änderung des Attributs (C) in Abhängigkeit vom Zustand der Anlage und/oder des Prozesses vorgesehen ist und
die Verarbeitungsvorrichtung (2) zur Darstellung der Meldung und/oder des Alarms auf Basis der Auswertung des Attributs (C) vorgesehen ist.

2. . System nach Anspruch 1, wobei die Verarbeitungsvorrichtung (2) zur dynamischen Verarbeitung und/oder Anzeige der Meldung und/oder des Alarms auf Basis der Auswertung des Attributs (C) vorgesehen ist.

3. System nach einem der vorhergehenden Ansprüche, mit einer Projektiervorrichtung (3), insbesondere einem Engineering-System zur Definition von Attributsklassen (A, B, C) und zur Übertragung von Attributen auf die mindestens eine Verarbeitungsvorrichtung (2), wobei die Attribute der Klasse B zur Übertragung auf den Meldeauslöser (1) vorgesehen sind und wobei die Attribute der Klasse C zur Übertragung auf die Verarbeitungsvorrichtung (2) via den Meldungsauslöser (1) vorgesehen sind.

4. System nach einem der vorhergehenden Ansprüche, wobei der Meldungsauslöser (1) als Steuerung ausgebildet ist.

5. System nach einem der vorhergehenden Ansprüche, wobei die Verarbeitungsvorrichtung (2) als HMI-System ausgebildet ist.

6. Verfahren zum Erzeugen und Darstellen von Meldungen und/oder Alarmen, insbesondere in einem Automatisierungssystem einer Anlage und/oder eines Prozesses, bei dem
• mindestens eine Meldung und/oder ein Alarm durch mindestens einen Meldungsauslöser (1) erzeugt wird, wobei die Meldung und/oder der Alarm mindestens ein Attribut (C) aufweist und
• die Meldung und/oder der Alarm mittels mindestens einer Verarbeitungsvorrichtung (2) dargestellt wird,
wobei der Meldungsauslöser (1) das Attribut (C) mit der Meldung und/oder dem Alarm an die mindestens eine Verarbeitungsvorrichtung (2) überträgt und wobei das Attribut (C) durch die Verarbeitungsvorrichtung (2) ausgewertet wird
**dadurch gekennzeichnet, dass**
das Attribut (C) durch den Meldungsauslöser (1) dynamisch in Abhängigkeit vom Zustand der Anlage und/oder des Prozesses geändert wird, wodurch eine veränderte Darstellung eines Prozesszustands erzielt wird und
bei dem die Meldung und/oder der Alarm auf Basis der Auswertung des Attributs (C) dargestellt wird.

7. Verfahren nach Anspruch 6, bei dem die Meldung und/oder der Alarm auf Basis der Auswertung des Attributs (C) dynamisch verarbeitet und/oder angezeigt wird.

8. Verfahren nach einem der Ansprüche 6 oder 7, bei dem Attribute der Attributsklassen A, B und C durch eine Projektiervorrichtung (3), insbesondere ein Engineering-System definiert werden und Attribute auf den die mindestens eine Verarbeitungsvorrichtung (2) übertragen werden.

9. Verfahren nach Anspruch 8, bei dem
• die Attribute der Attributsklassen A und B von der Projektiervorrichtung (3) an die mindestens eine Verarbeitungsvorrichtung (2)übertragen werden,
• die Attribute der Attributsklassen B und C von der Projektiervorrichtung (3) an den mindestens einen Meldungsauslöser (1) übertragen werden und
• die Attribute der Attributsklasse C von dem mindestens einen Meldungsauslöser (1) an die mindestens eine Verarbeitungsvorrichtung (2) übertragen werden.

## Claims

1. System for generating and displaying messages and/or alarms, particularly in an automation system of a plant and/or process,
• with at least one message trigger (1) for generating at least one message and/or alarm, the message and/or alarm having at least one attribute (C) and
• with at least one processing device (2) for displaying the message and/or alarm,
the message trigger (1) being designed to transmit the attribute (C) with the message and/or alarm to the at least one processing device (2) and the processing device (2) having means of evaluating the attribute (C)
**characterised in that**
the message trigger (1) is provided to dynamically modify the attribute (C) as a function of the state of the plant and/or the process and
the processing device (2) is provided to display the message and/or alarm on the basis of the evaluation of the attribute (C),

2. System according to claim 1, wherein the processing device (2) is designed to dynamically process and/or display the message and/or alarm on the basis of evaluation of the attribute (C).

3. System according to one of the preceding claims, with a planning device (3), in particular an engineering system for defining attribute classes (A, B, C) and transmitting attributes to the at least one processing device (2), the attributes of class B being intended for transmission to the message trigger (1) and the attributes of class C being intended for transmission to the processing device (2) via the message trigger (1).

4. System according to one of the preceding claims, wherein the message trigger (1) is implemented as a controller.

5. System according to one of the preceding claims, wherein the processing device (2) is implemented as an HMI system.

6. Method for generating and displaying messages and/or alarms, particularly in an automation system of a plant and/or process, in which
• at least one message and/or alarm is generated by at least one message trigger (1), the message and/or alarm having at least one attribute (C) and
• the message and/or alarm is displayed by means of at least one processing device (2),
whereby the message trigger (1) transmits the attribute (C) with the message and/or alarm to the at least one processing device (2) and the attribute (C) is evaluated by the processing device (2)
**characterised in that**
the attribute (C) is dynamically modified by the message trigger (1) as a function of the state of the plant and/or the process, as a result of which a modified display of a process state is achieved and
in which the message and/or alarm is displayed on the basis of the evaluation of the attribute (C).

7. Method according to claim 6, wherein the message and/or alarm is dynamically processed and/or displayed on the basis of evaluation of the attribute (C).

8. Method according to one of claims 6 or 7, wherein the attributes of the attribute classes A, B and C are defined by a planning device (3), in particular by an engineering system, and attributes are transmitted to the at least one processing device (2).

9. Method according to claim 8, wherein
• the attributes of the attribute classes A and B are transmitted by the planning device (3) to the at least one processing device (2),
• the attributes of the attribute classes B and C are transmitted by the planning device (3) to the at least one message trigger (1) and
• the attributes of attribute class C are transmitted by at least one message trigger (1) to the at least one processing device (2).

## Revendications

1. Système pour générer et représenter des notifications et/ou alarmes, notamment dans un système d'automatisation d'une installation et/ou d'un processus,
• Comprenant au moins un déclencheur de notifications (1) pour générer au moins une notification et/ou une alarme, la notification et/ou l'alarme ayant au moins un attribut (C) et
• comprenant au moins un dispositif de traitement (2) pour la représentation de la notification et/ou de l'alarme,
le déclencheur de notifications (1) étant prévu pour la transmission de l'attribut (C) avec la notification et/ou l'alarme au au moins un dispositif de traitement (2) et le dispositif de traitement (2) étant pourvu de moyens pour analyser l'attribut (C),
**caractérisé en ce que**
le déclencheur de notifications (1) est prévu pour la modification dynamique de l'attribut (C) en fonction de l'état de l'installation et/ou du processus et
le dispositif de traitement (2) est prévu pour la représentation de la notification et/ou de l'alarme sur la base de l'analyse de l'attribut (C).

2. Système selon la revendication 1, dans lequel le dispositif de traitement (2) est prévu pour le traitement dynamique et/ou l'affichage de la notification et/ou de l'alarme sur la base de l'analyse de l'attribut (C).

3. Système selon l'une des revendications précédentes, comprenant un dispositif de planification (3), notamment un système d'ingénierie, pour la définition de classes d'attributs (A, B, C) et la transmission d'attributs au au moins un dispositif de traitement (2), les attributs de la classe B étant prévus pour être transmis au déclencheur de notifications (1) et les attributs de la classe C étant prévus pour être transmis au dispositif de traitement (2) par le biais du déclencheur de notifications (1).

4. Système selon une des revendications précédentes, dans lequel le déclencheur de notifications (1) est exécuté en tant que commande.

5. Système selon une des revendications précédentes, dans lequel le dispositif de traitement (2) est exécuté en tant que système HMI.

6. Procédé de génération et représentation de notifications et/ou alarmes, notamment dans un système d'automatisation d'une installation et/ou d'un processus,
dans lequel
• au moins une notification et/ou une alarme est générée par au moins un déclencheur de notifications (1), la notification et/ou l'alarme ayant au moins un attribut (C) et
• la notification et/ou l'alarme est représentée au moyen d'au moins un dispositif de traitement (2),
le déclencheur de notifications (1) transmettant l'attribut (C) avec la notification et/ou l'alarme au au moins un dispositif de traitement (2) et l'attribut (C) étant analysé par le dispositif de traitement (2),
**caractérisé en ce que**
l'attribut (C) est modifié de manière dynamique par le déclencheur de notifications (1) en fonction de l'état de l'installation et/ou du processus, grâce à quoi on obtient une représentation modifiée d'un état d'un processus et
dans lequel la notification et/ou l'alarme est représentée sur la base de l'analyse de l'attribut (C).

7. Procédé selon la revendication 6, dans lequel la notification et/ou l'alarme est traitée et/ou affichée de manière dynamique sur la base de l'analyse de l'attribut (C).

8. Procédé selon l'une des revendications 6 ou 7, dans lequel des attributs des classes d'attributs A, B et C sont définis par un dispositif de configuration, notamment un système d'ingénierie, et les attributs sont transmis au au moins un dispositif de traitement (2).

9. Procédé selon la revendication 8, dans lequel
• les attributs des classes d'attributs A et B sont transmis du dispositif de configuration (3) au au moins un dispositif de traitement (2),
• les attributs des classes d'attributs B et C sont transmis du dispositif de configuration (3) au au moins un déclencheur de notifications (1) et
• les attributs de la classe d'attributs C sont transmis du au moins un déclencheur de notifications (1) au au moins un dispositif de traitement (2).
